# EUROPÄISCHE PATENTANMELDUNG

(11) **EP 2 465 715 A1**
(43) Veröffentlichungstag der Anmeldung: **20.06.2012**
(21) Anmeldenummer: 10015665.2
(22) Anmeldetag: 15.12.2010
(51) Int. Cl.: B60H 1/34, B60H 1/26, B60R 19/52, B21D 5/16

(54) **Lochblechgitter**

(71) Anmelder: Friedrich Graepel AG, 49624 Löningen (DE)
(72) Erfinder: Schute, Klaus, 49699 Lindern (DE)
(74) Vertreter: Weeg, Thomas

(57) **Zusammenfassung**

Die vorliegende Erfindung bezieht sich auf ein Lochblechgitter (2) aus einem metallischen Werkstoff mit einer Nutzfläche mit einer siebartigen Lochung.

Um ein Lochblechgitter zu schaffen, das bei einem hohen Lochanteil in der Fläche des Lochblechgitters über eine erhöhte Festigkeit verfügt, wird vorgeschlagen, dass das Lochblechgitter (2) neben der Nutzfläche mit der siebartigen Lochung ungelochte Flächen (14) aufweist, die zu zumindest einem mehrlagigen Steg (12) gefaltet sind.

## Beschreibung

Die vorliegende Erfindung bezieht sich auf ein Lochblechgitter aus einem metallischen Werkstoff mit einer Nutzfläche mit einer siebartigen Lochung.

Aus einem Lochblech hergestellte Lochblechgitter sind beispielsweise aus der Schrift DE 10 2006 026 655 A1 bekannt. Das dort offenbarte Lochblechgitter ist ein Kraftfahrzeug-Bauteil, es kann aber auch als Abdeckgitter für Lüftungsöffnungen in Klimaanlagen, Rauchabzugsanlagen, Stallbelüftungen und dergleichen genutzt werden. Entsprechende Lochblechgitter werden auch als Laufflächen in Treppenanlagen, Laufbrücken oder auf Plattformen verwendet.

Um als Lüftungsabdeckung einen hohen Luftdurchsatz durch das Lochblechgitter zu ermöglichen, ist es wünschenswert, möglichst viele Löcher auf der Fläche des Lochblechgitters anzuordnen. Aus diesem Grund wird der Flächenanteil der die Löcher umgrenzenden Blechstreifen minimiert. Bei einer verringerten Breite der Blechstreifen verringert sich aber auch die mechanische Belastbarkeit des Bauteils. Das Bauteil muss aber gleichwohl ausreichend stabil sein, um beispielsweise hinter dem Lochblechgitter angeordnete Lüftungskomponenten vor Fremdkörpern zu schützen. So können bei Kraftfahrzeugen von voraus fahrenden Fahrzeugen aufgewirbelte Steine gegen das Lochblechgitter geschleudert werden, Vögel können mit dem Lochblechgitter des fahrenden Fahrzeugs kollidieren, und bei Baufahrzeugen können bei Verladearbeiten Schüttgüter gegen das Lochblechgitter schlagen. Lüftungsanlagen in Gebäuden müssen vandalismussicher gestaltet sein, und Treppenanlagen, Laufbrücken und Plattformen müssen die üblichen Lasten ohne Verformungen aufnehmen können. Laufstege, Treppenanlagen und Brücken, die mit entsprechenden Lochblechen belegt sind für eine erhöhte Trittsicherheit und eine Verringerung der Ausrutschgefahr, müssen eine ausreichend hohe Belastbarkeit aufweisen. Für all diese Fälle muss das Lochblechgitter ausreichend stabil gestaltet sein, um sich nicht bei der ersten größeren Belastung dauerhaft zu verformen oder gar zu reißen. In der Schrift DE 10 2006 026 655 A1 wird vorgeschlagen, das Bauteil mit einer Wölbstruktur zu versehen. Um den vorstehend genannten Belastungen standzuhalten, reicht eine Wölbstruktur allein aber nicht aus, insbesondere, wenn das Bauteil großflächiger ausfallen soll. Manchmal ist eine Wölbstruktur auch unerwünscht, wie beispielsweise auf Laufflächen oder als Kühlerabdeckung in Nutzfahrzeugen. Die Festigkeit könnte auch erhöht werden, indem die Blechstreifen zwischen den Löchern breiter ausgeführt sind. Dies ist jedoch nicht akzeptabel, da dadurch der Luftdurchsatz eingeschränkt wäre. Bei Laufflächen ist ein hoher Lochanteil wünschenswert, um ausreichend rutschsicher zu sein und Schmutz durchfallen lassen zu können. Eine Verdickung des Materials ist für viele Anwendungen ebenfalls nicht möglich, da sonst die Löcher mit einem kaum noch vertretbaren Aufwand in das Material gestanzt werden müssten.

Demgemäß ist es die Aufgabe der vorliegenden Erfindung, ein Lochblechgitter zu schaffen, das bei einem hohen Lochanteil in der Fläche des Lochblechgitters über eine erhöhte Festigkeit verfügt.

Die Aufgabe wird für ein gattungsgemäßes Lochblechgitter gelöst, indem das Lochblechgitter neben der Nutzfläche mit der siebartigen Lochung ungelochte Flächen aufweist, die zu zumindest einem mehrlagigen Steg gefaltet sind.

Die ungelochten Flächen weisen für sich schon eine hohe Stabilität auf, da die Kraftverteilung in diesem Bauteil nicht durch die Lochanteile gestört ist. Durch die mehrlagige Gestaltung können von den mehreren Lagen größere Kräfte aufgenommen werden als das bei einer nur einlagigen Gestaltung der Fall wäre. Mit der mehrlagigen Faltung ist gemeint, dass die ungelochten Flächen so gefaltet sind, dass sie sich zumindest abschnittweise berühren oder nur mit einem geringen Luftspalt dazwischen zumindest abschnittsweise parallel oder zumindest nahezu parallel verlaufend angeordnet sind. Durch die mehrlagige Auffaltung der ungelochten Flächen zu einem Steg können sich die ungelochten Flächen bei einer Belastung auch gegenseitig abstützen, wenn die ungelochten Flächen aneinander liegend gefaltet sind. Über die Faltkante können von einer gelochten Fläche auf eine Lage einer ungelochten Fläche einwirkende Kräfte auf eine benachbarte Lage einer ungelochten Fläche übertragen werden, hierdurch wird die Festigkeit des Bauteils gegen einwirkende Kräfte insgesamt erhöht.

Bei einer flächig auf die Nutzfläche mit der siebartigen Lochung wirkenden zunehmenden Kraft und einer dynamischen Betrachtung der Auflagezone können die gelochten Flächen der einwirkenden Kraft leicht nachgeben, wenn ihre Haltekraftgrenzen erreicht werden. Wirkt die flächig einwirkende Kraft über einen oder mehrere Stege hinweg, hat das den Effekt, dass dann die auf die Fläche wirkende Kraft infolge der Ausweichbewegung der gelochten Flächen verstärkt nur von den wegen ihrer größeren Stabilität nicht ausweichenden Stegen aufgenommen und gehalten wird, wodurch die Nutzfläche zumindest zum Teil von der einwirkenden Kraft entlastet und ihre weitere Verformung vermieden wird. Die Stege verhindern auf diese Weise, dass die gelochte Nutzfläche mit Kräften belastet wird, denen sie nicht standzuhalten vermag, und nehmen in sich die einwirkenden Kräfte auf.

Ein Lochblechgitter kann bereits durch nur einen einzigen erfindungsgemäßen Steg erheblich versteift sein, je nach Bedarf können aber auch mehrere erfindungsgemä-Be Stege an dem Lochblechgitter ausgebildet sein. Die Position, Tiefe und Form des Stegs kann den Festigkeitsanforderungen an das Bauteil entsprechend ausgestaltet sein.

Auch Laufflächen, die durch erfindungsgemäß gestaltete Lochblechgitter gebildet sind, können rutschhemmend mit einem großen Lochanteil ausgestaltet sein, gleichwohl verfügen die Bauteile aber über eine hohe Festigkeit und Belastbarkeit und trotzdem ein vergleichsweise geringes Gewicht.

Nach einer Ausgestaltung der Erfindung handelt es sich bei der Nutzfläche um einen flächenhaften Luftdurchlass. Durch die Auffaltung der ungelochten Flächen werden die ungelochten Flächen in eine Ebene gefaltet, in der sie die Luftdurchlässigkeit des Lochblechgitters insgesamt kaum beeinträchtigen. So kann der flächenhafte Luftdurchlass auf seiner Nutzfläche nahezu vollständig mit Löchern versehen sein, während die versteifend wirkenden Stege in eine Richtung umgefaltet sind, in der die ungelochten Flächen von der Nutzfläche entfernt angeordnet sind, beispielsweise können sie parallel oder zumindest nahezu parallel zur Durchströmungsrichtung der durch das Lochblechgitter strömenden Luft liegen.

Nach einer Ausgestaltung der Erfindung sind über die Breite des Lochblechgitters mehrere voneinander beabstandete mehrlagige Stege ausgebildet. Durch mehrere Stege können auch größere Lochblechgitter ausreichend fest ausgesteift sein. Die Stege werden dann so über die Fläche des Lochblechgitters verteilt, dass die Festigkeitsanforderungen erfüllt werden. Die einzelnen Stege müssen nicht parallel zueinander verlaufen, sondern können auch jeweils eine unterschiedliche Raumausrichtung aufweisen.

Nach einer Ausgestaltung der Erfindung sind die Materiallagen des Stegs mittels einer formschlüssigen Verbindung und/oder einer Verschweißung direkt oder indirekt miteinander verbunden. Durch die Verbindung können einwirkende Kräfte besser auf die verbundenen Materiallagen verteilt werden. Die Abstützwirkung ist auf diese Weise erhöht. Als formschlüssige direkte Verbindungen kommen gemeinsame Sicken oder Einprägungen, Tox- oder Clinchverbindungen in Betracht, aber auch Schweißverbindungen und/oder indirekte Verbindungen durch zusätzliche verbindende Bauteile wie Niete, Bolzen und dergleichen sind möglich.

Nach einer Ausgestaltung der Erfindung ist in einen oder mehreren Stegen ein Versteifungselement eingelegt. Das Versteifungselement kann mit seinem Material zusätzliche Kräfte aufnehmen und den Steg auf diese Weise verstärken. Das Einlegen erfolgt, indem eine Verbindung, insbesondere formschlüssig, zwischen dem Versteifungselement und dem Material des Stegs hergestellt wird, beispielsweise durch eine Verpressung des Stegmaterials mit dem Versteifungselement.

Nach einer Ausgestaltung der Erfindung ist das Lochblechgitter aus einem einstückigen Metallblech hergestellt. Das Lochblechgitter kann hergestellt werden, indem zunächst aus einer Blechplatine die Löcher an den dafür vorgesehenen Stellen ausgestanzt werden und sodann die Faltungen erfolgen, indem die ungelochten Flächen umgekantet werden. Es ist auch eine umgekehrte Arbeitsweise möglich.

Nach einer Ausgestaltung der Erfindung sind einer oder mehrere mehrlagige Stege in einem rechten Winkel oder zumindest annähernd in einem rechten Winkel zur Fläche des Lochblechgitters angeordnet. Da eine auf die gelochte Fläche einwirkende Kraft meistens direkt von vorn einwirkt oder zumindest aus dieser Richtung die größte Kraft einbringt, kann diese Kraft am besten durch einen Steg aufgefangen werden, der in einem rechten Winkel zur Fläche des Lochblechgitters und damit im Wesentlichen in Kraftrichtung der einwirkenden Kraft ausgerichtet ist. Durch die rechtwinklige Ausrichtung des Stegs wird zudem die Durchströmung des Lochblechgitters, wenn es als flächenhafter Luftdurchlass ausgebildet ist, mit Luft so wenig wie möglich behindert.

Nach einer Ausgestaltung der Erfindung weisen die im Bereich eines Stegs einander zugewandten ungelochten Flächen eine korrosionsschützende Beschichtung auf. Die einen Steg bildenden eng aufeinander liegenden ungelochten Flächen bilden zwischen sich einen feinen Spalt aus, der mit Kapillarwirkung Feuchtigkeit aufnimmt, diese aber nur langsam wieder abgibt. Die aufeinander liegenden Flächen können somit einem Korrosionsrisiko ausgesetzt sein. Um diesem Risiko zu begegnen, ist es vorteilhaft, einen entsprechenden Korrosionsschutz vorzusehen.

Nach einer Ausgestaltung der Erfindung sind der oder die Stege auf der Rückseite der Nutzfläche des Lochblechgitters angeordnet. Durch die Anordnung der Stege auf der Rückseite entsteht auf der Nutzflächen-Seite des Lochblechgitters eine glatte Fläche, die gut begehbar ist oder von der Fremdkörper leicht wieder abprallen können, ohne die Stege zu verbiegen. Die Nutzfläche ist auch leicht von Verschmutzungen zu reinigen.

Nach einer Ausgestaltung der Erfindung ist die Nutzfläche uneben gestaltet. Durch die unebene Gestaltung wird die Steifigkeit des Bauteils zusätzlich erhöht. Durch die unebene Gestaltung kann die Form des Bauteils auch an besondere Karosserieformen angepasst werden, beispielsweise durch Sicken, Wölbungen und dergleichen. Es wird ausdrücklich darauf hingewiesen, dass die vorstehend beschriebenen Ausgestaltungen der Erfindung jeweils für sich, aber auch wahlweise untereinander mit dem Gegenstand des Hauptanspruches kombinierbar sind, soweit sie nicht von Merkmalen einer anderen Ausgestaltung abhängig sind.

Weitere Abwandlungen und Ausgestaltungen der Erfindung lassen sich der nachfolgenden gegenständlichen Beschreibung und den Zeichnungen entnehmen.

Die Erfindung soll nun anhand eines Ausführungsbeispiels näher beschrieben werden. Es zeigen:
- Fig. 1:: ein Lochblechgitter aus einer Ansicht von schräg oben, und
- Fig. 2:: ein Lochblechgitter aus einer Ansicht von oben.

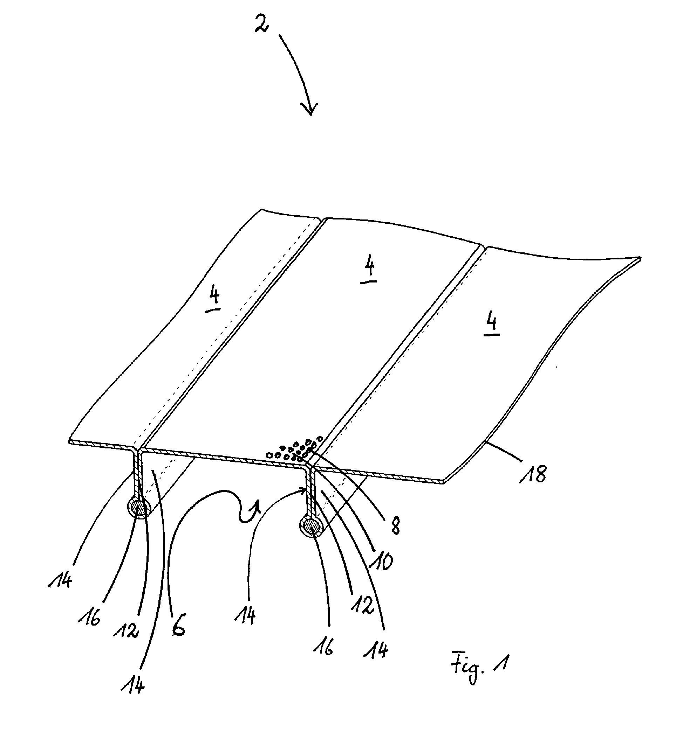

In Fig. 1 ist ein Lochblechgitter 2 aus einer Ansicht von schräg oben gezeigt. Die Nutzfläche 4 des Lochblechgitters 2 kann im Ausführungsbeispiel eine Frontfläche einer Abdeckung für die Kühlluftöffnung eines Fahrzeugs darstellen. Sie ist nach oben gerichtet, die Rückseite 6 nach unten. In der Nutzfläche 4 befinden sich eine Anzahl von Löchern 8, von denen aus Gründen der zeichnerischen Vereinfachung nur einige wenige gezeigt sind. Die Löcher 8 können beliebige Formen und Größen aufweisen. Die Löcher 8 werden umgrenzt von Blechstreifen 10. Die Blechstreifen 10 verfügen über eine Dicke und Breite, die den Belastungsanforderungen an das Lochblechgitter 2 gerecht wird. Die Blechstreifen 10 sind im Ausführungsbeispiel plan zur Nutzfläche 4 ausgebildet, sie können jedoch auch Vertiefungen und/oder Erhebungen aufweisen, sie können ganz oder teilweise schräg oder rechtwinklig zur Ebene des Lochblechgitters 2 umgebogen sein, und ihre Ränder können nach innen oder außen aufgebogen sein.

lm Ausführungsbeispiel sind rechtwinklig von der Nutzfläche 4 ungelochte Flächen 14 zu einem Steg 12 umgebogen. Im Ausführungsbeispiel sind die ungelochten Flächen 14 gänzlich ungelocht, sie können aber auch einzelne Löcher aufweisen, beispielsweise, um Bolzen oder Nieten hindurch zu führen. Die einzelnen Löcher sind dann aber so weit voneinander beabstandet, dass sich dazwischen ungelochte Flächen erstrecken, die eine erhöhte Festigkeit im Vergleich zur gelochten Nutzfläche 4 aufweisen. Im Ausführungsbeispiel sind jeweils zwei ungelochte Flächen 14 so umgebogen, dass sie aneinander zu liegen kommen, sich gegenseitig abstützen und gemeinsam einen Steg 12 bilden. Die ungelochten Flächen 14 können zusätzlich miteinander punktverschweißt oder entlang einer unterbrochenen oder ununterbrochenen Linie verschweißt sein, oder es können Durchsetzfügepunkte als form- und kraftschlüssige Verbindung gesetzt sein.

Im Ausführungsbeispiel ist in jeden Steg 12 jeweils ein stabförmiges Versteifungselement 16 eingesetzt. Die ungelochten Flächen 14 sind so geformt, dass sie das Versteifungselement 16 vollständig umschließen und auf diese Weise fest miteinander verbunden sind. Durch das stabförmige Versteifungselement 16 werden die Stege 12 in Belastungsrichtung zusätzlich versteift.

Aus der Fig. 1 ist erkennbar, dass die gelochten Nutzflächen 4 und die die Stege 12 bildenden ungelochten Flächen 14 des Lochblechgitters 2 aus einem einzigen einstückigen Metallblech 18 durch ein Abkanten von Teilflächen gebildet sind. Durch die entsprechende Ausgestaltung der gelochten und ungelochten Flächen und die räumliche Anordnung der Kantlinien an der Blechplatine ist es möglich, die gelochten Flächen als gelochte Nutzflächen 4 und die ungelochten Flächen 14 als Stege 12 auszubilden.

Durch die Anordnung der Stege 12 auf der Rückseite 6 des Lochblechgitters 2 ist es möglich, eine glatte Nutzfläche 4auszubilden. Dies ist beispielsweise wünschenswert, wenn eine äußere glatte Karosseriefläche nicht durch Rippen oder Stege 12 eines Lochblechgitters optisch gestört werden soll, oder wenn Rippen oder Stege 12 die Fläche schwerer begehbar machen würden. Die Stege 12 können auf der Abströmungsseite eines Lochblechgitters 2 zusätzlich die Durchströmung des Lochblechgitters 2 verbessern helfen, indem der Luftstrom von den Stegen 12 in eine gewünschte Richtung geleitet und die Gefahr von Turbulenzen verringert wird. Die Nutzflächen 4 und die Stege 12 können natürlich auch eine unebene Gestaltung aufweisen, die besser in das Design einer Fahrzeugkategorie hineinpasst, oder Rippen und Stege aufweisen, durch die Rutschneigung von Personen, die über das Lochblechgitter laufen, verringert wird..

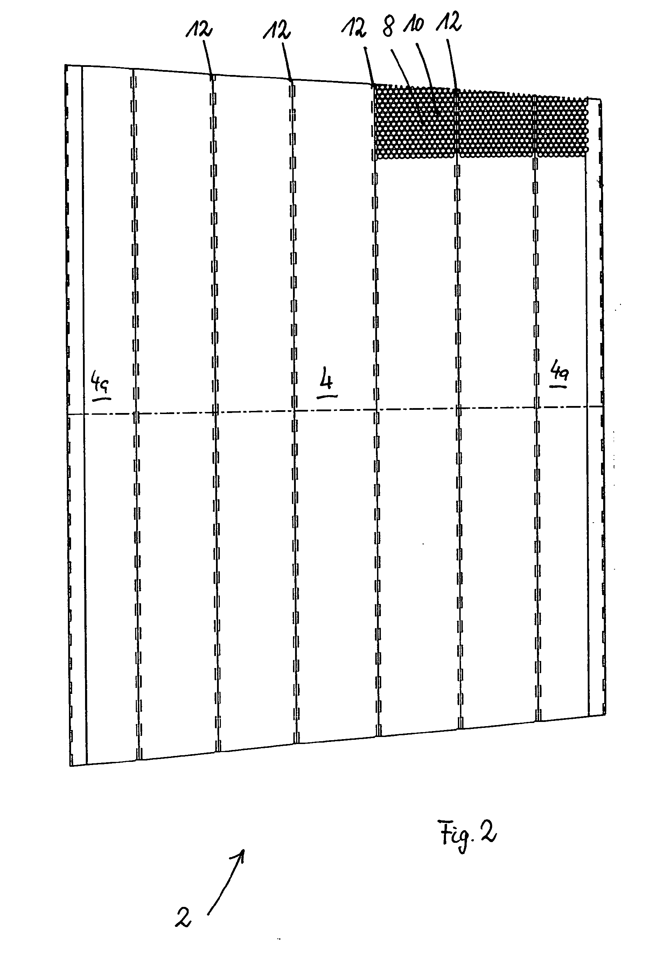

In Fig. 2 ist ein Lochblechgitter 2 aus einer Frontalansicht von vorn und von oben gezeigt. Auch hier ist die Lochung aus Gründen der zeichnerischen Vereinfachung nur in den kleinen Teilflächen rechts oben gezeigt. Aus dieser Ansicht ist nur die Nutzfläche 4 zu sehen. Das Lochblechgitter 2 verfügt über einen trapezförmigen Zuschnitt. Aus dieser Perspektive ist gut erkennbar, dass sich zwischen den fünf Nutzflächen 4 und den beiden seitlichen Schrägflächen 4a mit Kantung insgesamt sechs Stege 12 in regelmäßigen Abständen zueinander befinden. Die auf der Rückseite 6 des Lochblechgitters 2 befindlichen Stege 12 vermindern den Gesamtanteil der gelocht ausgebildeten Nutzflächen 4 an der Gesamtfläche des Lochblechgitters 2 kaum, erhöhen dessen Steifigkeit aber erheblich. Aus der Frontansicht sind die Stege 12 nur an der Naht erkennbar, an der entlang die ungelochten Flächen 14 zur Rückseite hin abtauchen.

Die Erfindung ist nicht auf das vorstehend beschriebene Ausführungsbeispiel beschränkt. Dem Fachmann bereitet es keine Schwierigkeiten, die Erfindung auf eine ihm als geeignet erscheinende Weise unter Anwendung seines Fachwissens abzuwandeln und dabei an eine konkrete Aufgabenstellung anzupassen, ohne dass dieser dabei dadurch die Benutzung des Gegenstands der Erfindung vermeidet.

## Patentansprüche

1. Lochblechgitter (2) aus einem metallischen Werkstoff mit einer Nutzfläche mit einer siebartigen Lochung, **dadurch gekennzeichnet, dass** das Lochblechgitter (2) neben der Nutzfläche mit der siebartigen Lochung ungelochte Flächen (14) aufweist, die zu zumindest einem mehrlagigen Steg (12) gefaltet sind.

2. Lochblechgitter (2) nach Anspruch 1, **dadurch gekennzeichnet, dass** es sich bei der Nutzfläche um einen flächenhaften Luftdurchlass handelt.

3. Lochblechgitter (2) nach Anspruch 1 oder 2, **dadurch gekennzeichnet, dass** über die Breite des Lochblechgitters (2) mehrere voneinander beabstandete mehrlagige Stege (12) ausgebildet sind.

4. Lochblechgitter (2) nach einem der vorhergehenden Ansprüche, **dadurch gekennzeichnet, dass** die Materiallagen des Stegs (12) mittels einer formschlüssigen Verbindung und/oder einer Verschweißung direkt oder indirekt miteinander verbunden sind.

5. Lochblechgitter (2) nach einem der vorhergehenden Ansprüche, **dadurch gekennzeichnet, dass** in einen oder mehreren Stegen (12) ein Versteifungselement (16) eingelegt ist.

6. Lochblechgitter (2) nach einem der vorhergehenden Ansprüche, **dadurch gekennzeichnet, dass** das Lochblechgitter (2) aus einem einstückigen Metallblech (18) hergestellt ist.

7. Lochblechgitter (2) nach einem der vorhergehenden Ansprüche, **dadurch gekennzeichnet, dass** einer oder mehrere mehrlagige Stege (12) in einem rechten Winkel oder zumindest annähernd in einem rechten Winkel zur Fläche des Lochblechgitters (2) angeordnet sind.

8. Lochblechgitter (2) nach einem der vorhergehenden Ansprüche, **dadurch gekennzeichnet, dass** die im Bereich eines Stegs (12) einander zugewandten ungelochten Flächen eine korrosionsschützende Beschichtung aufweisen.

9. Lochblechgitter (2) nach einem der vorhergehenden Ansprüche, **dadurch gekennzeichnet, dass** der oder die Stege (12) auf der Rückseite des Lochblechgitters (2) angeordnet sind.

10. Lochblechgitter (2) nach einem der vorhergehenden Ansprüche, **dadurch gekennzeichnet, dass** die Nutzfläche uneben gestaltet ist.
